# EUROPEAN PATENT SPECIFICATION

(11) **EP 3 709 460 B1**
(45) Date of publication and mention of the grant of the patent: **15.07.2026**
(21) Application number: 19170028.5
(22) Date of filing: 18.04.2019
(51) Int. Cl.: F16L 25/00, F16L 25/14, H02G 3/20, H02G 3/08, H02G 3/14, H02G 3/12, H02G 3/06

(54) **SPOUT, AND AN ASSEMBLY OF A DISTRIBUTION BOX AND ELECTRIC INSTALLATION MATERIAL**
TÜLLE UND ANORDNUNG AUS EINEM VERTEILERKASTEN UND ELEKTRISCHEM INSTALLATIONSMATERIAL
BEC, ENSEMBLE D'UNE BOÎTE DE DISTRIBUTION ET MATÉRIEL D'INSTALLATION ÉLECTRIQUE

(30) Priority: 13.03.2019 EP 19162509
(43) Date of publication of application: 16.09.2020
(73) Proprietor: ABB Schweiz AG, 5400 Baden (CH)
(72) Inventor: Renckens, Tom, 3742 ND Baarn (NL)
(74) Representative: Zimmermann & Partner Patentanwälte mbB

(56) References cited:
- EP-A1- 1 322 011
- EP-A1- 2 849 298
- EP-A1- 3 306 763
- EP-B1- 1 322 011
- US-A- 5 789 706

## Description

### BACKGROUND

The invention relates to a spout configured for being attached to a distribution box and enabled to receive flexible, ribbed tubes with different diameters, the spout comprising a spout wall having a spout wall body with a spout channel extending there through in a direction substantially parallel to the longitudinal direction of the spout, wherein the spout comprises a locking mechanism for locking a flexible, ribbed tube within the spout channel.

The invention further relates to an assembly of a distribution box and electric installation material, wherein the distribution box is provided with such a spout.

A spout designed for a flexible, ribbed tube with a predetermined diameter is well known. Such a spout for a flexible, ribbed tube has a flexible lip provided for interlocking with at least one rib of the ribs of the flexible, ribbed tube. When the spout which is intended for flexible, ribbed tubes is designed for receiving flexible, ribbed tubes with different diameters, one at a time, the flexible lip is also used for interlocking with at least one rib of the ribs of the flexible, ribbed tube, independently of the diameter of the received flexible, ribbed tube. Sometimes, the spout is provided with an additional lip for pushing the flexible, ribbed tube with a small diameter, such as 16 mm, against the flexible lip provided for interlocking with the at least one rib of the ribs of the flexible, ribbed tube.

Such a spout is known from European patent publication EP 2 849 298, which describes a device for electrical installations with at least one electrical installation box (2) and at least one latching element (1). The electrical installation box (2) has at least one connection channel (21), wherein a grooved installation tube (3) is insertable into the connection channel (21). The latching element (1) has at least one latching claw (11), the latching claw (11) being able to be latched into a groove in the installation tube (3). The latching element (1) is designed separately from the electrical installation box (3). The latching element (1) can be pushed into the connection channel (21)

Such a spout is further known from European patent publication EP 1 322 011, which describes a flush-mounted box for electrical elements, of the type consisting of a box-shaped housing with one or more entrances (7-8-9-10) integrated in the walls (3-4-5-6) of the housing, whereby at least one of these entrances comprises locking means (12) which can cooperate with flexible tubes (13-14) of at least two different diameters (D1-D2), wherein the aforementioned locking means (12), in respect to the locking of the flexible tubes (13) with the smallest of said two diameters (D1), as well as in respect to the locking of the flexible tubes (14) with the largest of said two diameters (D2), are of a permanently usable kind.

Furthermore, such a spout is known from European patent publication EP 3 306 763, which describes a device for electrical installations with at least one latching element (1) and at least one connection channel (21). The connection channel (21) is provided for inserting an installation pipe (3), in particular a grooved installation pipe (3). An installation tube (3), in particular a grooved installation tube (3), can be inserted into the connection channel (21) and the inside diameter of the connection channel (21) is adapted to the outside diameter of the installation tube. The locking element (1) has a first locking claw (11a) and a second locking claw (11b) for locking an installation pipe (3) in the connection channel (21). The latching element (1) is formed separately from the connection channel (21). This means that the connection channel (21) and the latching element (1) can be produced individually and independently of one another. Furthermore, the latching element (1) can be pushed into the connection channel (21). The latching element (1) has a proximal end area (10a), a distal end area (10c) and a support area (10b).

### SUMMARY OF THE INVENTION

A disadvantage of the known spout for flexible, ribbed tubes with different diameters, such as 16 mm and 19 mm diameter, is that the same flexible lip is used for interlocking with the flexible, ribbed tube with a diameter of 16 mm or for interlocking with the flexible, ribbed tube with a diameter of 19 mm. The flexible, ribbed tube with the diameter of 16 mm cannot be fixed properly within the spout because of the smaller diameter thereof, which enables the flexible, ribbed tube to move inside the spout that is also capable of receiving a flexible, ribbed tube with a diameter of 19 mm. When the flexible, ribbed tube is able to move inside the spout, this can result in the flexible, ribbed tube being pulled out of the spout unintentionally when pulled, resulting in connections between electrical wirings being destroyed. This disadvantage increases when the spout is also capable of receiving a flexible, ribbed tube with a diameter of 20 mm.

It is an object of the present invention to ameliorate or to eliminate one or more disadvantages of the known spout, or to at least provide an alternative spout.

According to a first aspect, the invention provides a spout configured for being attached to a distribution box and enabled to receive flexible, ribbed tubes with different diameters, as defined in the independent claim 1.

During use, the flexible, ribbed tube with the first tube diameter is received within the spout channel of the spout, or the flexible, ribbed tube with the second tube diameter is received within the spout channel of the spout. When a flexible, ribbed tube with a first tube diameter is received by the spout, the first locking mechanism interlocks with the ribbed tube in order to prevent the ribbed tube with the first tube diameter from moving within the spout channel, for example when pulled. When a flexible, ribbed tube with a second tube diameter is received by the spout, the second locking mechanism interlocks with the ribbed tube in order to prevent the ribbed tube with the second tube diameter from moving within the spout channel, for example when pulled. The spout according to the invention, thus, provides separate locking mechanisms for flexible, ribbed tubes with a first tube diameter or a second tube diameter, such that each flexible, ribbed tube, independently from the tube diameter thereof, is prevented from moving within the spout channel, when interlocked by one of the first or second locking mechanisms.

According to the invention, the spout channel has a first channel portion with a first diameter D1, and a second channel portion with a second diameter D2 different from the first diameter, wherein the first diameter D1 is smaller than the second diameter D2. In an embodiment thereof, the first locking mechanism is located at least partially within the first channel portion and the second locking mechanism is located within the second channel portion. For example, the first diameter D1 of the first channel portion substantially corresponds to the first tube diameter of the tube to be interlocked with by the first locking mechanism, and the second diameter D2 of the second channel portion substantially corresponds to the second tube diameter of the tube to be interlocked with by the second locking mechanism. Preferably the first diameter D1 of the first channel portion is about 16 mm, and the second diameter D2 of the second channel portion is about 19 mm. In practice, a flexible, ribbed tube usually firstly enters the second channel portion of the spout channel and secondly the first channel portion of the spout channel. When a flexible, ribbed tube with a tube diameter of 19 mm, optionally 20 mm, is inserted into the spout channel of the spout, this flexible, ribbed tube is tightly enclosed by the second channel portion and is prevented from entering the first channel portion. The second locking mechanism interlocks with at least one rib of the flexible, ribbed tube with the tube diameter of 19 mm, optionally 20 mm, while the first locking mechanism is not able to interlock with the respective ribbed tube. When a flexible, ribbed tube with a tube diameter of 16 mm is inserted into the spout channel of the spout, this flexible, ribbed tube is tightly enclosed by the first channel portion and extends through the second channel portion. The first locking mechanism interlocks with at least one rib of the flexible, ribbed tube with the tube diameter of 16 mm, while the second locking mechanism, optionally, does interlock with the respective ribbed tube. Depending on the diameter of the flexible, ribbed tube, the flexible ribbed tube is prevented from moving in a direction substantially transverse to the longitudinal direction of the spout by means of the first channel portion or the second channel portion. Additionally, since the first locking mechanism is located within the first channel portion, and the second locking mechanism is located within the second channel portion, the combination of the diameter of the flexible, ribbed tube and the diameter of the first channel portion or the second channel portion determines whether the flexible, ribbed tube is interlocked by the first locking mechanism or the second locking mechanism.

The spout comprises a transition edge provided between the first channel portion and the second channel portion, wherein the transition edge is only provided at the second side of the spout channel. The transition edge preferably comprises, at the side of the transition edge facing the second channel portion, a first edge portion extending substantially perpendicular to the longitudinal direction of the spout, and, preferably at the side of the transition edge facing the first channel portion, a second edge portion extending at an angle with respect to the longitudinal direction of the spout. In practice, a flexible, ribbed tube usually first enters the second channel portion of the spout channel and subsequently the first channel portion of the spout channel. As described above, the first channel portion has a first diameter D1 and the second channel portion has a second diameter D2, wherein the first diameter D1 is smaller than the second diameter D2. The transition edge prevents a flexible, ribbed tube with a tube diameter larger than the first diameter D1 from entering the first channel portion. Further, the transition edge may guide a flexible, ribbed tube with a tube diameter smaller than or equal to the first diameter D1 into the first channel portion.

In an embodiment, the spout comprises one or more contact strips provided at the inner circumference of the spout channel, preferably located within the second channel portion. An advantage of this embodiment is that the contact strips may clamp a flexible, ribbed tube within the spout channel.

In an embodiment the first locking mechanism is placed at the bottom side of the spout channel and the second locking mechanism is placed at the top side of the spout channel. The spout is intended to be used with flexible, ribbed tubes with different diameters. Therefore, the largest diameter of the spout channel of the spout is larger than the smallest diameter of a flexible, ribbed tube which can be inserted into the spout. When the flexible, ribbed tube with the smallest diameter is inserted into the spout channel, the outer circumference of the ribbed tube does not reach and contact the top side of the spout channel and thus is not interlocked by the second locking mechanism. In this case, the ribbed tube is interlocked by the first locking mechanism. When a ribbed tube with a diameter corresponding to the largest diameter of the spout channel is inserted into the spout channel, the outer circumference of the ribbed tube does reach and contact the top side of the spout channel. In this case the ribbed tube is at least interlocked by the second locking mechanism.

According to the invention, the spout wall body comprises a first opening and a second opening. Furthermore, the first locking mechanism is provided with a first locking lip having a first lip body and, at a first side thereof, connected to an edge delimiting the first opening, and a first locking tooth arranged at the second side, opposite to the first side, of the first locking lip and configured to interlock with at least one rib of a flexible, ribbed tube with the first tube diameter, and
wherein the second locking mechanism is provided with a second locking lip having a second lip body and, at a first side thereof, connected to an edge delimiting the second opening, and a second locking tooth arranged at the second side, opposite to the first side, of the second locking lip and configured to interlock with at least one rib of a flexible, ribbed tube with the second tube diameter. A flexible, ribbed tube includes a number of ribs having indentations there between. A locking tooth is able to enter one of the indentations between the ribs, thereby interlocking the flexible, ribbed tube within the spout channel of the spout. This is advantageous since it provides a reliable interlocking with a flexible, ribbed tube by means of a relatively simple construction.

According to the invention, the first locking lip and the second locking lip are flexible in order to be enabled to flex in a direction towards and away from the spout channel of the spout. Due to the first locking lip and/or the second locking lip being able to move towards and away from the spout channel, each of the locking lips is able to move away from the spout channel while inserting a flexible, ribbed tube and to move back towards the spout channel and thus the inserted ribbed tube when the ribbed tube is inserted. Additionally, each of the first locking and the second locking lip are prevented from breaking due to a ribbed tube being inserted into the spout channel thereby applying a force to at least one of the first locking and the second locking lip.

According to the invention, each of the first locking tooth and the second locking tooth comprises a locking surface extending substantially perpendicular to the longitudinal direction of the spout and configured for preventing the flexible, ribbed tube from coming loose when pulled, and a guiding surface being inclined with respect to the longitudinal direction of the spout and configured for allowing the flexible, ribbed tube to be inserted into the spout channel, at least partially. In practice, a flexible, ribbed tube is inserted into the spout channel in an insert direction. While inserting the flexible, ribbed tube, the latter moves over the guiding surface of the respective locking tooth, thereby pushing the respective locking lip away from the spout channel and partially deforming the flexible, ribbed tube. When the flexible, ribbed tube has been inserted, at least one rib of the ribbed tube abuts against the locking surface of the respective locking tooth when tried to move the ribbed tube in a direction opposite to the insert direction. An advantage of these features, therefore, is that a flexible, ribbed tube can be inserted into the spout channel relatively easily, while the risk of unintended removal of the flexible, ribbed tube is decreased or in the ideal case eliminated.

In an embodiment, the spout comprises one or more fastening members for fastening the spout to a support surface, each of the one or more fastenings members comprising a fastening channel, preferably extending substantially perpendicular to the longitudinal direction of the spout, for receiving a fastener. An advantage of this embodiment is that the spout can be secured to an external support surface, for example formed by transversal and/or longitudinal wooden beams which are used, for example, for constructing a hollow roof construction.

According to a second aspect, the invention provides an assembly of a distribution box and electric installation material with electric wirings, wherein the distribution box comprises a top wall and a circumferential wall upright from the top wall, wherein the top wall and the circumferential wall together enclose an installation space for installation material, wherein the distribution box comprises a bottom plane, opposite to the top wall, in which an installation opening is provided, wherein the circumferential wall is provided with one or more wire openings for electric wirings to pass through the circumferential wall, wherein a spout is provided for each of the one or more wire openings, wherein the spout is a spout according to the first aspect of the invention.

The assembly according to the second aspect of the invention has at least the same advantages as that are described in relation to the spout according to the first aspect of the invention.

In an embodiment, the circumferential wall has one or more groups of wire openings, wherein each of the one or more groups of wire openings is provided with a spout group having a number of spouts corresponding to the number of wire openings of the respective group of wire openings. In this embodiment, a flexible, ribbed tube can be arranged at each wire opening of the distribution box in a reliable manner.

In an embodiment, the spouts of each spout group are coupled to each other, preferably forming an integrated unit. In a further embodiment thereof, the one or more spouts are fixed to the distribution box. An advantage of this embodiment is the distribution box and the one or more spouts form a single unit, such that there is no need to separately buy one or more spouts, or to separately attach one or more spouts to the distribution box.

The various aspects and features described and shown in the specification can be applied, individually, wherever possible. These individual aspects, in particular the aspects and features described in the attached dependent claims, can be made subject of divisional patent applications.

### BRIEF DESCRIPTION OF THE DRAWINGS

The invention will be elucidated on the basis of an exemplary embodiment shown in the attached drawings, in which:
Figures 1A and 1B show an isometric view of a distribution box according to an embodiment of the invention, arranged at a ceiling plate; and a cross-sectional view of the distribution box and the ceiling plate according to line IB in figure 1A, respectively;
Figures 2A - 2B show an isometric view of the distribution box of figure 1A; and an exploded view of the distribution box having a top wall, a circumferential wall with spout groups, a bottom wall, and a lid, respectively;
Figures 3A - 3C show an enlarged isometric view of a spout group of the distribution box; an enlarged cross-sectional view of a part of the distribution box according to line IIIB in figure 2A; and the spout group of figure 3A when viewed in the insert direction, respectively; and
Figures 4A - 4B show a cross-sectional view of the distribution box according to line IVA in figure 2A; and a cross-sectional view of the distribution box according to line IVB in figure 2A.

### DETAILED DESCRIPTION OF THE INVENTION

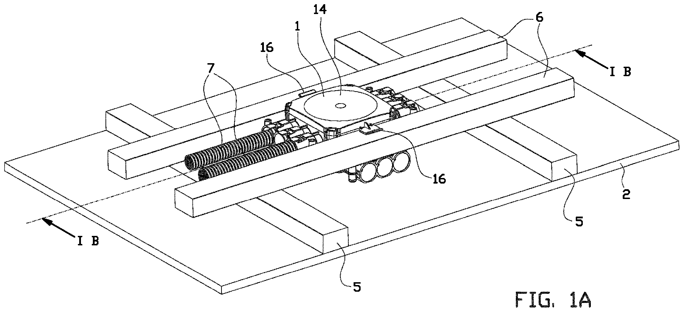

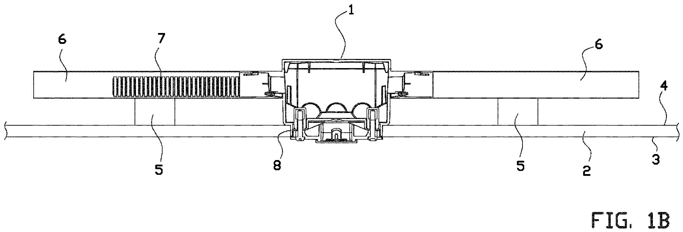

An embodiment of a distribution box 1 is shown in figures 1A and 1B. The distribution box 1 is arranged at a ceiling plate 2, such as plasterboard, having a front side 3 and a back side 4 opposite to the front side 3. The distribution box 1 is secured to the back side 4 of the ceiling plate 2 by means of two transversal beams 5 and two longitudinal beams 6 between which the distribution box 1 is placed. A through hole 8 is provided within the ceiling plate 2, through which the distribution box 1 partially extends and via which the distribution box 1 is accessible. Flexible, ribbed tubes 7 are connected to the distribution box, via which non-shown electric installation material including electric wirings is guided towards and into the distribution box 1.

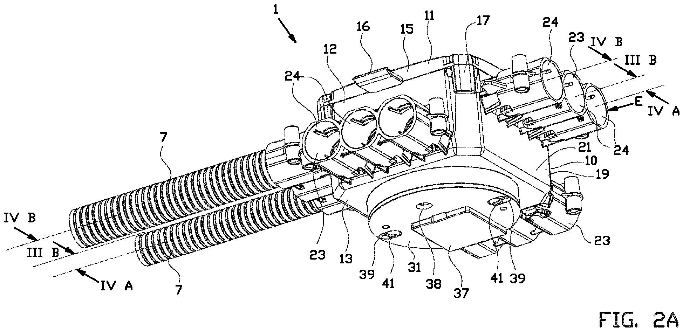

An isometric view of the distribution box 1 is shown in figure 2A. The distribution box 1 comprises a housing 10 having a top wall 11, a circumferential wall 12 upright from the top wall 11, and a bottom wall 13 opposite to the top wall 11. The top wall 11, the circumferential wall 12 and the bottom wall 13 together enclose an installation space for electric installation material. The top wall 11 is removable arranged at the circumferential wall 12, thereby forming a removable top lid 11. The removable top wall 11 comprises a top body 14 which is substantially quadrangular. The top body 11 has an outer circumference, at which an enclosing edge 15 upright from the top body 14 towards the circumferential wall is provided. Abutment flaps 16 are provided at opposite sides of the enclosing edge 15 for abutting to the longitudinal beams 6 when installed at the ceiling plate 2. A first engaging protrusion 17 is provided at each of the corners of the quadrangular top body 14, which first engaging protrusions 17 are arranged for engaging the circumferential wall 12 at the outside thereof. A pair of second engaging protrusions 18 is provided in proximity of each of the first engaging protrusions 17, wherein each pair of second engaging protrusions 18 is arranged for engaging the circumferential wall 12 at the inside thereof. When the top body 14 is placed at the circumferential wall 12, the circumferential wall 12 is received between each first engaging protrusion 17 and the associated pair of second engaging protrusions 18.

The circumferential wall 12 has a wall body 19 with wire openings 20 therein via which electric cables or wires can be inserted into the installation space. The wall body 19 has an outer side 21 and an inner side 22 opposite to the outer side 21. Multiple spout groups 23 are arranged at the outer side 21 of the wall body 19, wherein each spout group 23 has multiple, in this case three, spout channels 24 extending through the respective spout group 23 in an insert direction E substantially perpendicular to the wall body 19 and parallel to the bottom wall 11. Each spout channel 24 is associated with and placed in line with one of the wire openings 20, such that non-shown electric cables or wires can be inserted into the installation space in the insert direction E via the spout channels 24 and the associated cable opening 20.

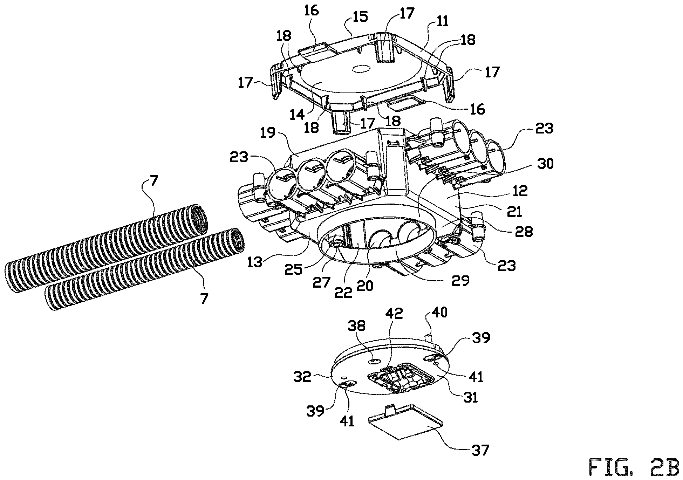

As shown in figures 2B and 2C, two receiving busses 25 are provided within the installation space. A first one of the two receiving busses 25 is arranged at a first surface of the inner side 22 of the circumferential wall 12 and the second one of the two receiving busses 25 is arranged at a second surface, opposite to the first side, of the inner side 22 of the circumferential wall 12. Each of the two receiving busses 25 is secured to the respective surface of the inner side 22 by securing members 26 which are extending at an angle with respect to the respective surface of the circumferential wall 12. The receiving busses 25 are each provided with a receiving opening 27 via which a receiving channel of the respective receiving buss is accessible.

As best shown in figures 2A and 2B, the bottom wall 13 has a bottom body 28 with an installation opening 29 via which the installation space inside the distribution box 1 is accessible. In an installed state of the installation box 1, the installation opening 29 can be used to access the installation space from the side of the ceiling plate 2 directed towards, for example, a room. The installation opening 29 is delimited by an installation edge 30 standing upright from the top body 28 in a direction away from the installation space.

Furthermore, a lid 31 is provided for being installed at the installation opening 29 to close off the installation opening 29 partially. The lid 31 comprises a lid body 32 with a lid edge 33 standing upright from the lid body 32 in the direction towards the installation space of the distribution box 1. The lid 31 is provided with a terminal block chamber 34 for receiving a terminal block 43, wherein the terminal block chamber 34 is formed by a deepening in the lid body 33. The terminal block chamber 34 has a chamber bottom 35 provided with two wiring openings 36 for electric wirings from the electric installation material to pass there through such that the electric wirings can be connected to the terminal block 43 within the terminal block chamber 34. An additional lid 37 is provided for closing off the terminal block chamber 34 at the side opposite to the chamber bottom 35. The additional lid 37 is removable from the lid 31 in order to access the terminal block 43 provided within the terminal block chamber 34. As best shown in figure 2A, the lid 31 comprises an additional wire opening 38 spaced from the additional lid 37, through which additional wire opening 38 electric wiring can pass from and to the installation space.

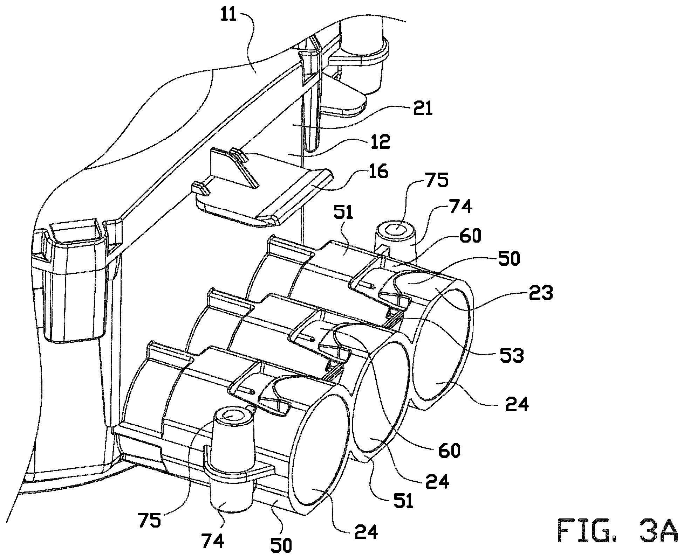

An enlarged isometric view of one of the spout groups 23 of the distribution box 1 is shown in figure 3A. Each spout group 23 comprises a number of spouts 50, in this case three spouts 50, which three spouts 50 are coupled to each other in order to form a spout group 23. Each of the spouts 50 has a cylindrical spout wall 51 through which one of the spout channels 24 extends in a direction parallel to the longitudinal direction of the spout 50. Each spout wall 52 includes a spout wall body 52 that defines the spout channel 24 extending there through. Reinforcements 53 are arranged between each pair of spouts 50.

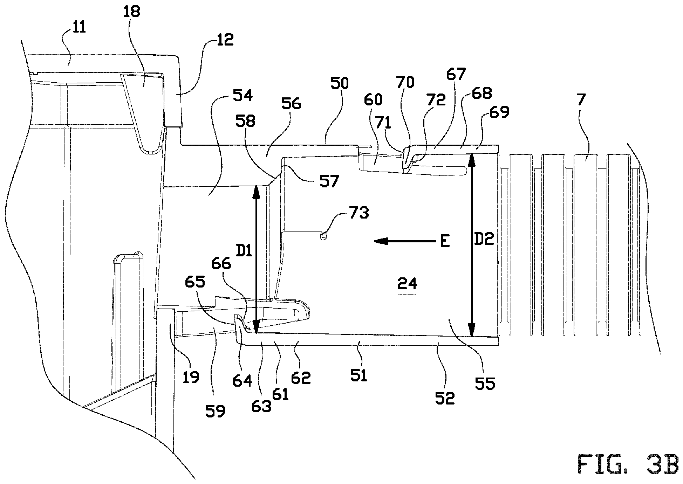

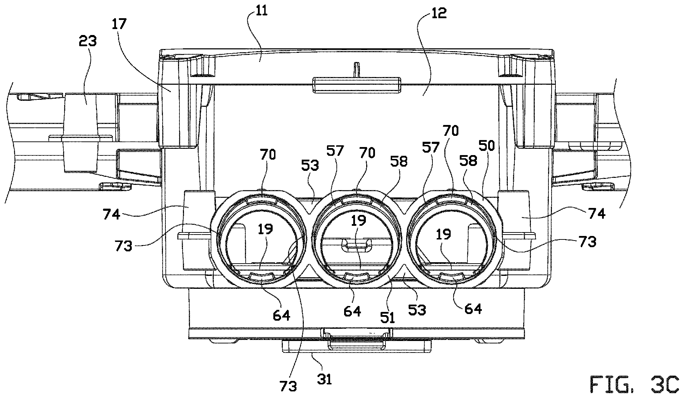

As shown in figure 3B, each spout channel 24 is provided with a first channel portion 54 at the side of the spout channel 24 facing the circumferential wall 12, and a second channel portion 55 at the side of the spout channel 24 facing away from the circumferential wall 12. The first channel portion 54 has a first diameter D1 and the second channel portion 55 has a second diameter D2, wherein the first diameter D1 is smaller than the second diameter D2. Between the first channel portion 54 and the second channel portion 55, a transition edge 56 is provided in order to provide a transition between the second channel portion 55 and the first channel portion 54. The transition edge 56, at the side of the transition edge 56 facing the second channel portion 55, comprises a first edge portion 57 extending substantially perpendicular to the longitudinal direction of the spout 50 and being arranged, extending radially, over a part, in particular the half, of the inner circumference of the spout channel 24, as shown in figure 3C. Additionally, the transition edge 56, at the side of the transition edge 56 facing the first channel portion 54, comprises a second edge portion 58 extending at an angle with respect to the longitudinal direction of the spout 50 and being arranged, extending radially, over a part, in particular about three quarters, of the inner circumference of the spout channel 24.

As shown in figures 3A and 3B, the spout wall 51 of each spout 50 is provided with a first opening 59 at a first side of the spout 50, such as at the bottom side of the spout 50, and a second opening 60 at a second side opposite to the first side of the spout 50, such as at the top side of the spout 50. The first opening 59 is arranged the closest to the circumferential wall 12, wherein the first opening 59 is arranged partially within the first channel portion 54 and partially within the second channel portion 55, and the second opening 60 is arranged within the second channel portion 55. A first locking mechanism 61 is arranged at the first opening 59 of the spout wall 51. The first locking mechanism 61 comprises a first locking lip 62 having a first lip body 63 having a first side and a second side, opposite to the first side. The first locking lip 62, at the first side thereof, is connected to an edge delimiting the first opening 59, wherein the first locking lip 62 is flexible in order to be enabled to flex in a direction towards and away from the spout channel 24 of the spout 50. The first locking mechanism 61 further comprises a first locking tooth 64 arranged at the second side of the first locking lip 62. The first locking tooth 64 extends into the spout channel 24 of the spout 50 and is configured to interlock with at least one rib of a flexible, ribbed tube 7 inserted into the spout channel 24 to fixate the tube 7 in the spout 50. As shown in figure 3B, the first locking tooth 64, at the side facing the circumferential wall 12, has a first locking surface 65 extending substantially perpendicular to the longitudinal direction of the spout 50 and configured for preventing the flexible, ribbed tube 7 from coming loose when pulled, when the first locking tooth 64 is interlocked with the at least one rib of the flexible, ribbed tube 7. The first locking tooth 64, at the side facing away from the circumferential wall 12, has a first guiding surface 66 being inclined with respect to the longitudinal direction of the spout 50 and configured for allowing the flexible, ribbed tube 7 to be inserted into the spout channel 24, at least partially. It is clear from figure 3B that the inclination of the first guiding surface 66 with respect to the longitudinal direction varies in the height of the first locking tooth 64.

A second locking mechanism 67 is arranged at the second opening 60 of the spout wall 51. The second locking mechanism 67 comprises a second locking lip 68 having a second lip body 69 with a first side and a second side, opposite to the first side. The second locking lip 68, at the first side thereof, is connected to an edge delimiting the second opening 60, wherein the second locking lip 68 is flexible in order to be enabled to flex in a direction towards and away from the spout channel 24 of the spout 50. The second locking mechanism 67 further comprises a second locking tooth 70 arranged at the second side of the second locking lip 68. The second locking tooth 70 extends into the spout channel 24 of the spout 50 and is configured to interlock with at least one rib of a flexible, ribbed tube 7 inserted into the spout channel 24 to fix the tube 7 in the spout 50. As shown in figure 3B, the second locking tooth 64, at the side facing the circumferential wall 12, has a second locking surface 71 extending substantially perpendicular to the longitudinal direction of the spout 50 and configured for preventing the flexible, ribbed tube 7 from coming loose when pulled, when the second locking tooth 70 is interlocked with the at least one rib of the flexible, ribbed tube 7. The second locking tooth 70, at the side facing away from the circumferential wall 12, has a second guiding surface 72 being inclined with respect to the longitudinal direction of the spout 50 and configured for allowing the flexible, ribbed tube 7 to be inserted into the spout channel 24, at least partially. It is clear from figure 3B that the inclination of the second guiding surface 72 with respect to the longitudinal direction varies in the height of the second locking tooth 70.

As shown in figures 3B and 3C, two contact strips 73 are arranged at the inner circumference of the spout channel 24, wherein the two contact strips 73 are arranged at opposite sides of the spout channel 24. The two contact strips 73 are located within the second channel portion 55 of the spout channel 24, such that at least when a flexible, rigged tube 7 having a tube diameter substantially corresponding to the second diameter D2 of the second channel portion 55 is inserted into the second channel portion 55, the two contact strips 73 contact the outer circumference of the inserted flexible, ribbed tube 7.

Figures 3B and 3C show that the spout channel 24 at the end facing the circumferential wall 12, preferably the outlet of the spout channel 24 at or near the circumferential wall 12, is partially blocked by the wall body 19 in order to prevent a flexible, ribbed tube 7 having a tube diameter substantially corresponding to the first diameter D1 of the first channel portion 54 from entering the installation space of the distribution box.

In figures 3A and 3B, it is shown that each spout group 23 is provided with two fastening members 74 for fastening the distribution box 1, for example, to the transversal beams 5 and/or the longitudinal beams 6. The two fastening members 74 are provided at opposite sides of the respective spout group 23 and each of the two fastening members 74 is provided with a fastening channel 75 extending substantially perpendicular to the longitudinal direction of the spouts 50 of the spout group 23. Each fastening channel 75 is configured for receiving a fastener, such as a screw or a tie-wrap.

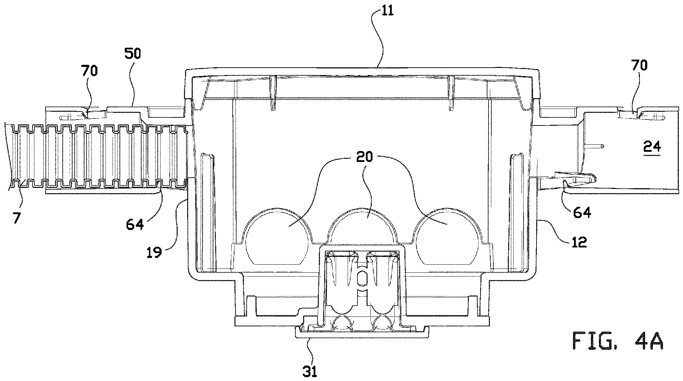

Figure 4A shows a cross-sectional view of the distribution box 1 of figure 2A along line IVA-IVA. It is shown that a flexible, ribbed tube 7 having a first tube diameter, for example 16 mm, substantially corresponding to the first diameter D1 of the first channel portion 54 is inserted into the spout channel 24. Due to the first tube diameter corresponding to the first diameter D1, the flexible, ribbed tube 7 is enabled to be inserted into the first channel portion 54 of the spout channel 24 until the inserted end of the flexible, ribbed tube 7 abuts against the wall body 19 of the circumferential wall 12. The first locking tooth 64 is interlocked with a rib of the flexible, ribbed tube 7, such that the flexible, ribbed tube 7 is prevented from coming loose when pulled. Because of the placement of the first locking tooth 64 within the first channel portion 54, at the bottom side thereof, and of the second locking tooth 70 within the second channel portion 55, at the top side thereof, only the first locking tooth 64 is interlocked with the flexible, ribbed tube 7, when a flexible, ribbed tube 7 having a tube diameter substantially corresponding to the first diameter D1 of the first channel portion 54 is inserted into the spout channel 24.

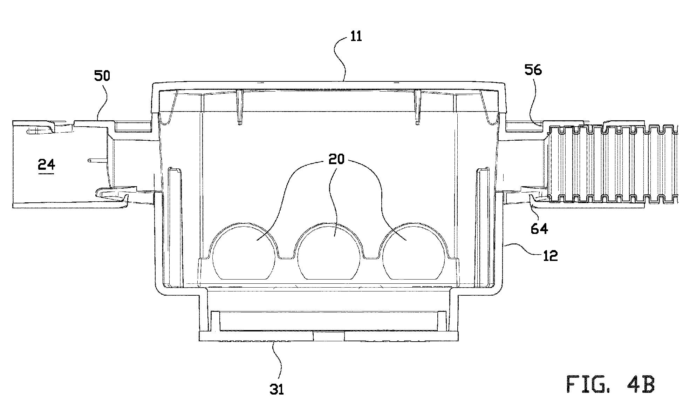

Figure 4B shows a cross-sectional view of the distribution box 1 of figure 2A along line IVB-IVB. It is shown that a flexible, ribbed tube 7 having a second tube diameter, for example 19 or 20 mm, substantially corresponding to the second diameter D2 of the second channel portion 55 is inserted into the spout channel 24. Due to the second tube diameter corresponding to the second diameter D2, the flexible, ribbed tube 7 only is enabled to be inserted into the second channel portion 55 of the spout channel 24 because the inserted end of the flexible, ribbed tube 7 abuts against the transition edge 56 between the second channel portion 55 and the first channel portion 54. The second locking tooth 70 is interlocked with a rib of the flexible, ribbed tube 7, such that the flexible, ribbed tube 7 is prevented from coming loose when pulled. Because of the placement of the first locking tooth 64 within the first channel portion 54, at the bottom side thereof, and of the second locking tooth 70 within the second channel portion 55, at the top side thereof, only the second locking tooth 70 is interlocked with the flexible, ribbed tube 7, when a flexible, ribbed tube 7 having a tube diameter substantially corresponding to the second diameter D2 of the second channel portion 55 is inserted into the spout channel 24.

It is to be understood that the above description is included to illustrate the operation of the preferred embodiments and is not meant to limit the scope of the invention. From the above discussion, many variations will be apparent to one skilled in the art that would yet be encompassed by the scope of the present invention.

In the figures, each of the spouts 50 is fixed to the circumferential wall 12 of the distribution box 1, for example because of the method of producing such a distribution box 1 with multiple spouts 50, such as injection moulding. It, however, is also possible to couple each of the spouts 50 or spout groups 23 to the distribution box 1 in a removable manner.

### List of reference numerals

- 1.: distribution box
- 2.: ceiling plate
- 3.: front side
- 4.: back side
- 5.: transversal beams
- 6.: longitudinal beams
- 7.: Flexible tubes
- 8.: through hole
- 10.: housing
- 11.: top wall
- 12.: circumferential wall
- 13.: bottom wall
- 14.: top body
- 15.: enclosing edge
- 16.: abutment flaps
- 17.: engaging protrusions
- 19.: wall body
- 20.: cable openings
- 21.: outer side
- 22.: inner side
- 23.: spout group
- 24.: spout channels
- 25.: receiving busses
- 26.: securing members
- 27.: receiving opening
- 28.: bottom body
- 29.: installation opening
- 30.: installation edge
- 31.: lid
- 32.: lid body
- 33.: lid edge
- 34.: terminal block chamber
- 35.: chamber bottom
- 36.: wiring openings
- 37.: additional lid
- 38.: additional wire opening
- 39.: screw recesses
- 40.: screws
- 41.: screw heads
- 42.: hook hanging channel
- 43.: terminal block
- 50.: spout
- 51.: spout wall
- 52.: spout wall body
- 53.: Reinforcement
- 54.: first channel portion
- 55.: second channel portion
- 56.: transition edge
- 57.: first edge portion
- 58.: second edge portion
- 59.: first opening
- 60.: second opening
- 61.: first locking mechanism
- 62.: first locking lip
- 63.: first lip body
- 64.: first locking tooth
- 65.: first locking surface
- 66.: first guiding surface
- 67.: second locking mechanism
- 68.: second locking lip
- 69.: second lip body
- 70.: second locking tooth
- 71.: second locking surface
- 72.: second guiding surface
- 73.: contact strips
- 74.: fastening member
- 75.: fastening channel

## Claims

1. Spout (50) configured for being attached to a distribution box (1) and enabled to receive flexible, ribbed tubes (7) with different diameters, the spout (50) comprising a spout wall (51) having a spout wall body (52) with a spout channel (24) extending there through in a direction substantially parallel to the longitudinal direction of the spout (50), wherein the spout (50) comprises a locking mechanism (61) for locking a flexible, ribbed tube (7) within the spout channel (24), wherein the locking mechanism (61) is a first locking mechanism (61) configured for interlocking with ribs of a flexible, ribbed tube (7) with a first tube diameter, wherein the spout (50) comprises a second locking mechanism (67) configured for interlocking with ribs of a flexible, ribbed tube (7) with a second tube diameter different from the first tube diameter, wherein the spout channel (24) has a first channel portion (54) with a first diameter D1, and a second channel portion (55) with a second diameter D2 different from the first diameter, wherein the first diameter D1 is smaller than the second diameter D2, wherein the first locking mechanism (61) is located at least partially within the first channel portion (54) and the second locking mechanism (67) is located within the second channel portion (55), wherein the spout wall body (52) comprises a first opening (59) at a first side of the spout channel (24), and a second opening (60) at a second side of the spout channel (24) diametrically opposite to the first side of the spout channel (24), wherein the first opening (59) is arranged partially within the first channel portion (54) and partially within the second channel portion (55), wherein the second opening (60) is arranged within the second channel portion (55), wherein the first locking mechanism (61) is provided with a first locking lip (62) having a first lip body (63) and, at a first side thereof, connected to an edge delimiting the first opening (59), and a first locking tooth (64) arranged at a second side, opposite to the first side, of the first locking lip (62) and configured to interlock with at least one rib of a flexible, ribbed tube (7) with the first tube diameter, and wherein the second locking mechanism (67) is provided with a second locking lip (68) having a second lip body (69) and, at a first side thereof, connected to an edge delimiting the second opening (60), and a second locking tooth (70) arranged at the second side, opposite to the first side, of the second locking lip (68) and configured to interlock with at least one rib of a flexible, ribbed tube (7) with the second tube diameter, wherein the first locking lip (62) and the second locking lip (68) are flexible in order to be enabled to flex in a direction towards and away from the spout channel (24) of the spout (50), and wherein each of the first locking tooth (64) and the second locking tooth (70) comprises a locking surface (65, 71) extending substantially perpendicular to the longitudinal direction of the spout (50) and configured for preventing the flexible, ribbed tube (7) from coming loose when pulled, and a guiding surface (66, 72) being inclined with respect to the longitudinal direction of the spout (50) and configured for allowing the flexible, ribbed tube (7) to be inserted into the spout channel (24), at least partially, wherein the spout (50) further comprises a transition edge (56) provided between the first channel portion (54) and the second channel portion (55), **characterized in that** the transition edge (56) is only provided at the second side of the spout channel (24).

2. Spout (50) according to claim 1, wherein the first diameter D1 of the first channel portion (54) is about 16 mm, and the second diameter D2 of the second channel portion (55) is about 19 mm.

3. Spout (50) according to any one of claims 1 - 2, wherein the transition edge (56) comprises at the side of the transition edge (56) facing the second channel portion (55), a first edge portion (57) extending substantially perpendicular to the longitudinal direction of the spout (50), and, preferably at the side of the transition edge (56) facing the first channel portion (54), a second edge portion (58) extending at an angle with respect to the longitudinal direction of the spout (50).

4. Spout (50) according to any one of the claims 1 - 3, further comprising one or more contact strips (73) provided at the inner circumference of the spout channel (24), preferably located within the second channel portion (55).

5. Spout (50) according to any one of the preceding claims, wherein the first locking mechanism (61) is placed at the bottom side of the spout channel (54) and the second locking mechanism is placed at the top side of the spout channel (54).

6. Spout (50) according to any one of the preceding claims, wherein the spout (50) comprises one or more fastening members (74) for fastening the spout (50) to a support surface, each of the one or more fastenings members (74) comprising a fastening channel (75), preferably extending substantially perpendicular to the longitudinal direction of the spout (50), for receiving a fastener.

7. Assembly of a distribution box (1) and electric installation material with electric wirings, wherein the distribution box (1) comprises a top wall (11) and a circumferential wall (12) upright from the top wall (11), wherein the top wall (11) and the circumferential wall (12) together enclose an installation space for installation material, wherein the distribution box (1) comprises a bottom plane, opposite to the top wall, in which an installation opening (29) is provided, wherein the circumferential wall (12) is provided with one or more wire openings (20) for electric wirings to pass through the circumferential wall (12), wherein a spout (50) is provided for each of the one or more wire openings (20), **characterized in that** the spout (50) is a spout (50) according to any one of the previous claims.

8. Assembly according to claim 7, wherein the circumferential wall (12) has one or more groups of wire openings (20), wherein each of the one or more groups of wire openings is provided with a spout group (23) having a number of spouts (50) corresponding to the number of wire openings (20) of the respective group of wire openings (20).

9. Assembly according to claim 8, wherein the spouts (50) of each spout group (23) are coupled to each other, preferably forming an integrated unit.

10. Assembly according to any one of claims 7 - 9, wherein the one or more spouts (50) are fixed to the distribution box (1).

## Patentansprüche

1. Tülle (50), die dazu ausgelegt ist, an einem Verteilerkasten (1) befestigt zu werden und in der Lage ist, flexible, gerippte Rohre (7) mit unterschiedlichen Durchmessern aufzunehmen, wobei die Tülle (50) eine Tüllewand (51) mit einem Tüllewandkörper (52) mit einem Tüllekanal (24), der sich durch diesen in einer Richtung im Wesentlichen parallel zur Längsrichtung der Tülle (50) erstreckt, umfasst, wobei die Tülle (50) einen Verriegelungsmechanismus (61) zum Verriegeln eines flexiblen, gerippten Rohrs (7) innerhalb des Tüllekanals (24) umfasst, wobei der Verriegelungsmechanismus (61) ein erster Verriegelungsmechanismus (61) ist, der zum Verriegeln mit Rippen eines flexiblen, gerippten Rohrs (7) mit einem ersten Rohrdurchmesser ausgelegt ist, wobei die Tülle (50) einen zweiten Verriegelungsmechanismus (67) umfasst, der zum Verriegeln mit Rippen eines flexiblen, gerippten Rohrs (7) mit einem zweiten Rohrdurchmesser, der sich vom ersten Rohrdurchmesser unterscheidet, ausgelegt ist, wobei der Tüllekanal (24) einen ersten Kanalabschnitt (54) mit einem ersten Durchmesser D1 und einen zweiten Kanalabschnitt (55) mit einem zweiten Durchmesser D2, der sich vom ersten Durchmesser unterscheidet, aufweist, wobei der erste Durchmesser D1 kleiner als der zweite Durchmesser D2 ist, wobei sich der erste Verriegelungsmechanismus (61) zumindest teilweise innerhalb des ersten Kanalabschnitts (54) befindet und sich der zweite Verriegelungsmechanismus (67) innerhalb des zweiten Kanalabschnitts (55) befindet, wobei der Tüllewandkörper (52) eine erste Öffnung (59) an einer ersten Seite des Tüllekanals (24) und eine zweite Öffnung (60) an einer zweiten Seite des Tüllekanals (24), die der ersten Seite des Tüllekanals (24) diametral gegenüberliegt, umfasst, wobei die erste Öffnung (59) teilweise innerhalb des ersten Kanalabschnitts (54) und teilweise innerhalb des zweiten Kanalabschnitts (55) angeordnet ist, wobei die zweite Öffnung (60) innerhalb des zweiten Kanalabschnitts (55) angeordnet ist, wobei der erste Verriegelungsmechanismus (61) mit einer ersten Verriegelungslippe (62) versehen ist, die einen ersten Lippenkörper (63) aufweist und an einer ersten Seite davon mit einer Kante verbunden ist, die die erste Öffnung (59) begrenzt, und mit einem ersten Verriegelungszahn (64), der an einer zweiten Seite, die der ersten Seite gegenüberliegt, der ersten Verriegelungslippe (62) angeordnet und dazu ausgelegt ist, mit mindestens einer Rippe eines flexiblen, gerippten Rohrs (7) mit dem ersten Rohrdurchmesser zu verriegeln, und wobei der zweite Verriegelungsmechanismus (67) mit einer zweiten Verriegelungslippe (68) versehen ist, die einen zweiten Lippenkörper (69) aufweist und an einer ersten Seite davon mit einer Kante verbunden ist, die die zweite Öffnung (60) begrenzt, und mit einem zweiten Verriegelungszahn (70), der an der zweiten Seite, die der ersten Seite gegenüberliegt, der zweiten Verriegelungslippe (68) angeordnet und dazu ausgelegt ist, mit mindestens einer Rippe eines flexiblen, gerippten Rohrs (7) mit dem zweiten Rohrdurchmesser zu verriegeln, wobei die erste Verriegelungslippe (62) und die zweite Verriegelungslippe (68) flexibel sind, um in eine Richtung zum Tüllekanal (24) der Tülle (50) hin und von diesem weg biegsam zu sein, und wobei sowohl der erste Verriegelungszahn (64) als auch der zweite Verriegelungszahn (70) eine Verriegelungsfläche (65, 71), die sich im Wesentlichen senkrecht zur Längsrichtung der Tülle (50) erstreckt und dazu ausgelegt ist, zu verhindern, dass das flexible, gerippte Rohr (7) beim Ziehen gelöst wird, und eine Führungsfläche (66, 72), die in Bezug zur Längsrichtung der Tülle (50) geneigt und dazu ausgelegt ist, zu ermöglichen, dass das flexible, gerippte Rohr (7) zumindest teilweise in den Tüllekanal (24) eingesetzte wird, umfasst, wobei die Tülle (50) ferner eine Übergangskante (56) umfasst, die zwischen dem ersten Kanalabschnitt (54) und dem zweiten Kanalabschnitt (55) vorgesehen ist, **dadurch gekennzeichnet, dass** die Übergangskante (56) nur an der zweiten Seite des Tüllekanals (24) vorgesehen ist.

2. Tülle (50) nach Anspruch 1, wobei der erste Durchmesser D1 des ersten Kanalabschnitts (54) etwa 16 mm beträgt und der zweite Durchmesser D2 des zweiten Kanalabschnitts (55) etwa 19 mm beträgt.

3. Tülle (50) nach einem der Ansprüche 1-2, wobei die Übergangskante (56) an der dem zweiten Kanalabschnitt (55) zugewandten Seite der Übergangskante (56) einen ersten Randabschnitt (57), der sich im Wesentlichen senkrecht zur Längsrichtung der Tülle (50) erstreckt, und, vorzugsweise an der dem ersten Kanalabschnitt (54) zugewandten Seite der Übergangskante (56), einen zweiten Randabschnitt (58), der sich in einem Winkel in Bezug zur Längsrichtung der Tülle (50) erstreckt, umfasst.

4. Tülle (50) nach einem der Ansprüche 1-3, ferner umfassend einen oder mehrere Kontaktstreifen (73), die am Innenumfang des Tüllekanals (24) vorgesehen sind, vorzugsweise innerhalb des zweiten Kanalabschnitts (55) angeordnet sind.

5. Tülle (50) nach einem der vorhergehenden Ansprüche, wobei der erste Verriegelungsmechanismus (61) an der Unterseite des Tüllekanals (54) platziert ist und der zweite Verriegelungsmechanismus an der Oberseite des Tüllekanals (54) platziert ist.

6. Tülle (50) nach einem der vorhergehenden Ansprüche, wobei die Tülle (50) ein oder mehrere Befestigungselemente (74) zum Befestigen der Tülle (50) an einer Stützfläche umfasst, wobei jedes des einen oder der mehreren Befestigungselemente (74) einen Befestigungskanal (75) umfasst, der sich vorzugsweise im Wesentlichen senkrecht zur Längsrichtung der Tülle (50) erstreckt, um ein Befestigungselement aufzunehmen.

7. Anordnung eines Verteilerkastens (1) und elektrischen Installationsmaterials mit elektrischen Verdrahtungen, wobei der Verteilerkasten (1) eine obere Wand (11) und eine von der oberen Wand (11) aufrechte Umfangswand (12) umfasst, wobei die obere Wand (11) und die Umfangswand (12) zusammen einen Installationsraum für Installationsmaterial umschließen, wobei der Verteilerkasten (1) eine der oberen Wand gegenüberliegende Bodenebene umfasst, in der eine Installationsöffnung (29) vorgesehen ist, wobei die Umfangswand (12) mit einer oder mehreren Drahtöffnungen (20) zum Durchführen elektrischer Verdrahtungen durch die Umfangswand (12) versehen ist, wobei eine Tülle (50) für jede der einen oder mehreren Drahtöffnungen (20) vorgesehen ist, **dadurch gekennzeichnet, dass** die Tülle (50) eine Tülle (50) nach einem der vorhergehenden Ansprüche ist.

8. Anordnung nach Anspruch 7, wobei die Umfangswand (12) eine oder mehrere Gruppen von Drahtöffnungen (20) aufweist, wobei jede der einen oder mehreren Gruppen von Drahtöffnungen mit einer Tüllegruppe (23) versehen ist, die eine Anzahl von Tülleöffnungen (50) aufweist, die der Anzahl von Drahtöffnungen (20) der jeweiligen Gruppe von Drahtöffnungen (20) entspricht.

9. Anordnung nach Anspruch 8, wobei die Tüllen (50) jeder Tüllegruppe (23) miteinander gekoppelt sind, vorzugsweise eine integrierte Einheit ausbilden.

10. Anordnung nach einem der Ansprüche 7-9, wobei die eine oder die mehreren Tüllen (50) am Verteilerkasten (1) befestigt sind.

## Revendications

1. Bec (50) conçu pour être fixé à une boîte de distribution (1) et pouvant recevoir des tubes nervurés flexibles (7) présentant des diamètres différents, le bec (50) comprenant une paroi de bec (51) ayant un corps de paroi de bec (52) avec un canal de bec (24) s'étendant à travers celui-ci dans une direction sensiblement parallèle à la direction longitudinale du bec (50), le bec (50) comprenant un mécanisme de verrouillage (61) pour verrouiller un tube nervuré flexible (7) dans le canal de bec (24), le mécanisme de verrouillage (61) étant un premier mécanisme de verrouillage (61) conçu pour s'imbriquer avec des nervures d'un tube nervuré flexible (7) présentant un premier diamètre de tube, le bec (50) comprenant un second mécanisme de verrouillage (67) conçu pour s'imbriquer avec des nervures d'un tube nervuré flexible (7) présentant un second diamètre de tube différent du premier diamètre de tube, le canal de bec (24) ayant une première partie de canal (54) présentant un premier diamètre D1, et une seconde partie de canal (55) présentant un second diamètre D2 différent du premier diamètre, le premier diamètre D1 étant inférieur au second diamètre D2, le premier mécanisme de verrouillage (61) étant situé au moins partiellement à l'intérieur de la première partie de canal (54) et le second mécanisme de verrouillage (67) étant situé à l'intérieur de la seconde partie de canal (55), le corps de paroi de bec (52) comprenant une première ouverture (59) au niveau d'un premier côté du canal de bec (24), et une seconde ouverture (60) au niveau d'un second côté du canal de bec (24) diamétralement opposé au premier côté du canal de bec (24), la première ouverture (59) étant située partiellement à l'intérieur de la première partie de canal (54) et partiellement à l'intérieur de la seconde partie de canal (55), la seconde ouverture (60) étant située à l'intérieur de la seconde partie de canal (55), le premier mécanisme de verrouillage (61) étant pourvu d'une première lèvre de verrouillage (62) ayant un premier corps de lèvre (63) et, sur un premier côté de celui-ci, reliée à un bord délimitant la première ouverture (59), et une première dent de verrouillage (64) située au niveau d'un second côté, opposé au premier côté, de la première lèvre de verrouillage (62) et conçue pour s'imbriquer avec au moins une nervure d'un tube nervuré flexible (7) présentant le premier diamètre de tube, et le second mécanisme de verrouillage (67) étant pourvu d'une seconde lèvre de verrouillage (68) ayant un second corps de lèvre (69) et, au niveau d'un premier côté de celui-ci, reliée à un bord délimitant la seconde ouverture (60), et une seconde dent de verrouillage (70) située au niveau du second côté, opposé au premier côté, de la seconde lèvre de verrouillage (68) et conçue pour s'imbriquer avec au moins une nervure d'un tube nervuré flexible (7) présentant le second diamètre de tube, la première lèvre de verrouillage (62) et la seconde lèvre de verrouillage (68) étant flexibles afin de pouvoir fléchir dans une direction se rapprochant et s'éloignant du canal de bec (24) du bec (50), et chacune de la première dent de verrouillage (64) et de la seconde dent de verrouillage (70) comprenant une surface de verrouillage (65, 71) s'étendant sensiblement perpendiculairement à la direction longitudinale du bec (50) et conçue pour empêcher le tube nervuré flexible (7) de se desserrer lorsqu'il est tiré, et une surface de guidage (66, 72) inclinée par rapport à la direction longitudinale du bec (50) et conçue pour permettre l'insertion du tube nervuré flexible (7) dans le canal de bec (24), au moins partiellement, le bec (50) comprenant en outre un bord de transition (56) situé entre la première partie de canal (54) et la seconde partie de canal (55), **caractérisé en ce que** le bord de transition (56) est uniquement situé au niveau du second côté du canal de bec (24).

2. Bec (50) selon la revendication 1, le premier diamètre D1 de la première partie de canal (54) étant d'environ 16 mm, et le second diamètre D2 de la seconde partie de canal (55) étant d'environ 19 mm.

3. Bec (50) selon l'une quelconque des revendications 1 à 2, le bord de transition (56) comprenant, au niveau du côté du bord de transition (56) faisant face à la seconde partie de canal (55), une première partie de bord (57) s'étendant sensiblement perpendiculairement à la direction longitudinale du bec (50), et, de préférence, au niveau du côté du bord de transition (56) faisant face à la première partie de canal (54), une seconde partie de bord (58) s'étendant selon un angle par rapport à la direction longitudinale du bec (50).

4. Bec (50) selon l'une quelconque des revendications 1 à 3, comprenant en outre une ou plusieurs bandes de contact (73) fournies au niveau de la circonférence intérieure du canal de bec (24), de préférence situées à l'intérieur de la seconde partie de canal (55).

5. Bec (50) selon l'une quelconque des revendications précédentes, le premier mécanisme de verrouillage (61) étant placé au niveau du côté inférieur du canal de bec (54) et le second mécanisme de verrouillage étant placé au niveau du côté supérieur du canal de bec (54).

6. Bec (50) selon l'une quelconque des revendications précédentes, le bec (50) comprenant un ou plusieurs éléments de fixation (74) pour fixer le bec (50) à une surface de support, chacun du ou des éléments de fixation (74) comprenant un canal de fixation (75), de préférence s'étendant sensiblement perpendiculairement à la direction longitudinale du bec (50), pour recevoir un élément de fixation.

7. Ensemble d'une boîte de distribution (1) et d'un matériel d'installation électrique pourvu de câblages électriques, la boîte de distribution (1) comprenant une paroi supérieure (11) et une paroi circonférentielle (12) verticale à partir de la paroi supérieure (11), la paroi supérieure (11) et la paroi circonférentielle (12) entourant ensemble un espace d'installation pour le matériel d'installation, la boîte de distribution (1) comprenant un plan inférieur, opposé à la paroi supérieure, dans lequel une ouverture d'installation (29) est ménagée, la paroi circonférentielle (12) étant pourvue d'au moins une ouverture à fil (20) pour que des câblages électriques passent à travers la paroi circonférentielle (12), un bec (50) étant fourni pour chacune de l'au moins une ouverture à fil (20), **caractérisé en ce que** le bec (50) est un bec (50) selon l'une quelconque des revendications précédentes.

8. Ensemble selon la revendication 7, la paroi circonférentielle (12) comprenant un ou plusieurs groupes d'ouvertures à fil (20), chacun du ou des groupes d'ouvertures à fil étant pourvu d'un groupe de becs (23) comportant un nombre de becs (50) correspondant au nombre d'ouvertures à fil (20) du groupe respectif d'ouvertures à fil (20).

9. Ensemble selon la revendication 8, les becs (50) de chaque groupe de becs (23) étant accouplés les uns aux autres, formant de préférence une unité intégrée.

10. Ensemble selon l'une quelconque des revendications 7 à 9, le ou les becs (50) étant fixés à la boîte de distribution (1).
